# EUROPÄISCHE PATENTANMELDUNG

(11) **EP 2 193 724 A1**
(43) Veröffentlichungstag der Anmeldung: **09.06.2010**
(21) Anmeldenummer: 09014150.8
(22) Anmeldetag: 12.11.2009
(51) Int. Cl.: A23L 1/317, A22C 11/00

(54) **Grillfertiges Fleischprodukt**

(30) Priorität: 27.11.2008 DE 102008060171
(71) Anmelder: Velisco Geflügel GmbH & Co. KG, 74585 Rot am See (DE)
(72) Erfinder: Schmidt, Peter, 74592 Kirchberg (DE)
(74) Vertreter: Patentanwälte Ruff, Wilhelm, Beier, Dauster & Partner

(57) **Zusammenfassung**

Ein grillfertiges Fleischprodukt nach Art eines Grillzopfs, einer Grillfackel, eines Grillspießes oder dergleichen besteht aus mindestens zwei fleischhaltigen Strängen, die mindestens teilweise miteinander verschlungen sind. Die Stränge sind dabei unter Verwendung von kleinteiligem Fleisch und mindestens einem Geliermittel gefertigt.

## Beschreibung

Die Erfindung betrifft in erster Linie ein grillfertiges Fleischprodukt nach Art eines Grillzopfs, einer Grillfackel, eines Grillspießes oder dergleichen, wobei das Fleischprodukt aus mindestens zwei mindestens teilweise miteinander verschlungenen, fleischhaltigen Strängen besteht.

Bekanntlich erfreut sich das Grillen, das immer schon beliebt war, in den letzten Jahren einer immer noch größeren Beliebtheit. Dementsprechend sind sowohl Metzgereien als auch die Fleischindustrie bemüht, dem Verbraucher eine große Auswahl an grillfertigen Fleischprodukten zur Verfügung zu stellen. Die Produktpalette reicht hierbei von entsprechend vorgeschnittenen Fleischstücken über eingelegte oder marinierte Fleischstücke bis hin zu speziellen Grillprodukten wie Grillwürsten, Grillschnecken, Grillspießen und dergleichen.

In diesem Zusammenhang sind auch bereits Grillprodukte bekannt, bei denen einzelne langgestreckte Fleischstücke, z. B. Filet, Rücken oder Bauch, miteinander verschlungen werden. Je nach Ausgestaltung werden solche grillfertigen Produkte dann als Grillzöpfe, Grillfackeln oder auch als Grillspieße bezeichnet. Wie erwähnt, kommen hier bisher für die Einzelstränge nur massive Fleischstücke zum Einsatz. Dies führt dazu, dass die entsprechenden Produkte in der Regel in Handarbeit gefertigt werden müssen und keiner industriellen Produktion bzw. Vorproduktion zugänglich sind.

Die Erfindung stellt sich dementsprechend die Aufgabe, ein neues grillfertiges Fleischprodukt der eingangs genannten Art zur Verfügung zu stellen. Idealerweise sollen dabei zumindest die einzelnen Stränge, aus denen dann das fertige Fleischprodukt hergestellt wird, einer industriellen (Vor-)Produktion zugänglich sein. Gleichzeitig soll es möglich sein, eine Vielzahl unterschiedlicher Produkte bereitzustellen, beispielsweise dadurch, dass die Einzelstränge in ihrem Inneren mit Füllungen versehen werden können.

Diese Aufgabe wird gelöst durch das Fleischprodukt mit den Merkmalen des Anspruchs 1 bzw. durch das Vorprodukt (Strang) mit den Merkmalen des Anspruchs 15. Bevorzugte Ausführungsformen des Fleischproduktes sind in den abhängigen Ansprüchen 2 bis 14 beschrieben. Weiter umfasst die Erfindung das Verfahren zur Herstellung eines grillfertigen Fleischprodukts gemäß Anspruch 16.

Die Erfindung umfasst ein grillfertiges Fleischprodukt nach Art eines Grillzopfs, einer Grillfackel, eines Grillspießes oder dergleichen, das aus mindestens zwei fleischhaltigen Strängen besteht, die mindestens teilweise miteinander verschlungen sind. Die Stränge sind dabei unter Verwendung von kleinteiligem Fleisch und mindestens einem Geliermittel gefertigt.

Unter "grillfertig" soll dabei ein Produkt verstanden werden, das vom Verbraucher ohne weitere Vorbehandlung direkt auf den Grill gelegt oder in entsprechender Weise gegart werden kann. Es wird sich dabei in der Regel um ein rohes Fleischprodukt handeln. Es soll jedoch erfindungsgemäß nicht ausgeschlossen sein, dass das erfindungsgemäße grillfertige Fleischprodukt bereits vom Hersteller wärmebehandelt ist. Eine solche Wärmebehandlung durch den Hersteller kann beispielsweise in einer Fritteuse, einem Ofen oder einem Heißluftofen erfolgen. Ein solches (Vor-)Garen kann vom Hersteller beispielsweise vorgenommen werden, um die Haltbarkeit des Fleischprodukts zu erhöhen.

Unter "Geliermittel" soll erfindungsgemäß jeder Stoff, hier Nahrungsmittel-Zusatzstoff, verstanden werden, der dem erfindungsgemäßen Produkt durch jede geeignete Art der Gelbildung eine erhöhte Viskosität gibt, um auf diese Weise für eine ausreichende Verfestigung des erfindungsgemäßen Fleischprodukts zu sorgen. Man könnte deshalb das bei der Erfindung zum Einsatz kommende Geliermittel auch als einen strukturverstärkenden Stabilisator bezeichnen. Um welche Stoffe es sich hier erfindungsgemäß bevorzugt handelt, wird im folgenden noch erläutert.

Wie oben dargestellt, sind die das Fleischprodukt bildenden Stränge erfindungsgemäß mindestens teilweise umeinander geschlungen bzw. miteinander verschlungen. Dadurch werden die Einzelstränge gegeneinander verdreht und auf diese Weise aneinander festgelegt.
Erfindungsgemäß werden mindestens zwei Stränge mindestens teilweise miteinander verschlungen. So können beispielsweise mehrere Stränge zu einem Zopf miteinander verflochten werden. Solche Anordnungen sind beispielsweise von Haarzöpfen oder auch von Backwaren, nämlich von sogenannten Hefezöpfen, her bekannt. Erfindungsgemäß bevorzugt sind Fleischprodukte, bei denen zwei Stränge miteinander verschlungen werden. Dies wird im folgenden im Zusammenhang mit dem Ausführungsbeispiel noch näher erläutert.

Vom Stand der Technik unterscheidet sich das erfindungsgemäße Fleischprodukt unter anderem dadurch, dass es unter Verwendung von kleinteiligem Fleisch gefertigt ist. Dies soll in erster Linie bedeuten, dass das Fleischprodukt nicht aus "massiven" langgestreckten Fleischstücken, wie z. B. Filet, hergestellt ist, sondern aus kleinteiligem Fleisch, wie es bisher nicht zur Herstellung von derartigen Produkten, wie Grillzöpfen und dergleichen, verwendet werden konnte.
Vorzugsweise beträgt der Teilchendurchmesser des Fleischs bei der Erfindung weniger als 10 mm, wobei hierbei ein Bereich zwischen 3 mm und 5 mm bevorzugt ist. Insbesondere beträgt der Teilchendurchmesser ca. 4 mm.

Als Geliermittel können, wie oben bereits ausgeführt, grundsätzlich alle für die Nahrungsmittelindustrie zu diesem Zweck geeigneten Stoffe eingesetzt werden. So ist grundsätzlich auch der Einsatz klassischer Geliermittel wie Gelatine möglich. Da Gelatine jedoch tierischen Ursprungs ist, kann die Verwendung von Geliermitteln pflanzlichen Ursprungs, beispielsweise von Pektinen, bevorzugt sein.
Besonders hervorzuheben für den Einsatz bei der Erfindung sind Geliermittel, die aus Algen gewonnen werden. Neben Agar-Agar, Carrageen und Alginsäure sind dies insbesondere die Salze der Alginsäure, vorzugsweise Natriumalginat, Kaliumalginat und/oder Ammoniumalginat.

In den das erfindungsgemäße Fleischprodukt bildenden Strängen sind die Geliermittel vorzugsweise in einer Menge von mindestens 0,2 Gew.-%, bezogen auf das (Gesamt-)Gewicht des Strangs enthalten. Insbesondere beträgt die Menge der Geliermittel im Strang zwischen 0,2 Gew.-% und 5 Gew.-%, wobei Mengen zwischen 0,2 Gew.-% und 1 Gew.-%, insbesondere von ca. 0,5 Gew.-%, besonders hervorzuheben sind.

In Weiterbildung weist das erfindungsgemäße Fleischprodukt zusätzlich mindestens ein sogenanntes Festigungsmittel auf. Solche Festigungsmittel bewirken, dass die Festigkeit von Lebensmitteln während und insbesondere nach ihrer Verarbeitung erhalten bleibt. Vorzugsweise wird dadurch verhindert, dass die Nahrungsmittel breiig werden und wieder auseinanderfließen. Das appetitliche Aussehen der Nahrungsmittel soll erhalten bleiben.
Bei der Erfindung kommen als Festigungsmittel vorzugsweise Calciumsalze zum Einsatz, insbesondere Calciumsulfat. Diese Calciumsalze entfalten ihre vorteilhafte Wirkung bei der Erfindung insbesondere beim Einsatz von Alginaten als Geliermittel. Bekanntlich handelt es sich bei den Alginaten um Polysaccharide, die unter Einlagerung von Calciumionen gelieren und dreidimensionale Strukturen ausbilden. Im vorliegenden Fall dient also das verwendete Festigungsmittel gleichzeitig zur Bereitstellung der für die Gelierung der Alginate verantwortlichen Calciumionen.

Die erfindungsgemäß verwendeten Festigungsmittel können in die das Produkt bildenden Stränge eingearbeitet sein. Es ist jedoch auch möglich und bevorzugt, das Festigungsmittel von außen auf den bereits vorgefertigten Strang oder sogar von außen auf das fertige Fleischprodukt aufzugeben, um auf diese Weise die zusätzliche Festigkeit bereitzustellen. Auch dies wird im Zusammenhang mit dem Ausführungsbeispiel noch näher erläutert.

Erfindungsgemäß wird das Festigungsmittel in einer Menge von mindestens 0,2 Gew.-%, bezogen auf das (Gesamt-)Gewicht des Strangs, bereitgestellt. Vorzugsweise sind die Festigungsmittel in einer Menge zwischen 0,2 Gew.-% und 5 Gew.-%, insbesondere in einer Menge zwischen 0,2 Gew.-% und 1 Gew.-%, vorgesehen. Innerhalb des letztgenannten Bereichs ist eine Menge für die Festigungsmittel von ca. 0,5 Gew.-% hervorzuheben.

Bei weiteren bevorzugten Ausführungsformen der Erfindung ist mindestens ein Teil der das Fleischprodukt bildenden Stränge mindestens teilweise gefüllt, d. h. mit einer Füllung versehen. Der entsprechende Strang besteht also aus einem inneren Teil, d. h. der Füllung, und einem äußeren Teil, d. h. der Hülle. Die Hülle umschließt die Füllung radial vollständig, so dass die Füllung aus dem Strang nicht in unerwünschter Weise heraustreten kann.
Dementsprechend kann das erfindungsgemäße Fleischprodukt entweder nur aus nicht gefüllten Strängen oder nur aus gefüllten Strängen oder aus gefüllten und nicht gefüllten Strängen bestehen. Es besteht auch die Möglichkeit, dass Stränge nur teilweise gefüllt sind, d. h. dass gefüllte und nicht gefüllte Abschnitte in einem Strang existieren.

In Weiterbildung ist es bei den zuletzt genannten Ausführungsformen mit Füllung bevorzugt, wenn die Füllung die Funktion einer beim Grillen häufig vom Verbraucher gewünschten Gewürzsoße übernimmt. Dementsprechend sind die Stränge bei solchen Ausführungsformen mit einer Füllung versehen, die man im weitesten Sinne als Gewürzsoße bezeichnen kann. Diese Gewürzsoßen können die unterschiedlichsten Gewürze enthalten, die die unterschiedlichsten Geschmacksrichtungen bereitstellen. So kann es sich beispielsweise um Schaschliksoßen, Senfsoßen, Hamburgersoßen oder dergleichen handeln.

In Weiterbildung ist die Füllung bei der Erfindung fleischhaltig. Dies bedeutet, dass auch in der Füllung, beispielsweise der Gewürzsoße, Fleischstücke enthalten sind. Dies führt zum einen zu einer festeren Konsistenz der Füllung. Zum anderen wird die Gewürzkonzentration in der Füllung durch die Fleischbeigabe reduziert, um einen zu starken Gewürzgeschmack im Gesamtprodukt zu vermeiden.
Der angesprochene Fleischanteil in der Füllung beträgt vorzugsweise mindestens 30 Gew.-%, insbesondere ca. 50 Gew.-%, jeweils bezogen auf das Gesamtgewicht der Füllung.

Wird eine fleischhaltige Füllung verwendet, so ist es bevorzugt, hier das gleiche kleinteilige Fleisch einzusetzen, wie es bereits oben definiert und beschrieben wurde.

Bei den Ausführungsformen mit gefüllten Strängen beträgt der Gewichtsanteil der Füllung am (Gesamt-)Gewicht des Strangs mindestens 20 Gew.-%, vorzugsweise mindestens 40 Gew.-%. Vorzugsweise beträgt der Gewichtsanteil der Füllung am Gewichtsanteil des Strangs ca. 50 Gew.-%. Dies bedeutet, dass Hülle (äußerer Teil des Strangs) und Füllung (innerer Teil des Strangs) jeweils 50 Gew.-% Gewichtsanteil des Stranges bereitstellen.

Neben den bereits beschriebenen Bestandteilen kann das erfindungsgemäße Fleischprodukt weitere Zusatzstoffe, Füllstoffe und dergleichen enthalten. In diesem Zusammenhang ist beispielsweise Lactose als weiterer Bestandteil im erfindungsgemäßen Fleischprodukt zu nennen. Es ist jedoch erfindungsgemäß bevorzugt, wenn der gesamte Fleischanteil im erfindungsgemäßen Produkt mindestens 80 Gew.-% beträgt.

Erfindungsgemäß kann das grillfertige Fleischprodukt mit Hilfe von allen gängigen Fleischarten gefertigt sein. Es ist jedoch bevorzugt, wenn es sich hier um Geflügelfleisch, insbesondere um Putenfleisch, handelt.

In Weiterbildung ist das gesamte erfindungsgemäße Fleischprodukt, zumindest aber die das Produkt bildenden Stränge, maschinell hergestellt. Die damit verbundenen Vorteile werden im folgenden noch zusammenfassend beschrieben.
In Weiterbildung kann das erfindungsgemäße Fleischprodukt in einer luftdichten Verpackung verpackt sein, insbesondere unter einer Schutzgasatmosphäre (in der Regel Stickstoff und/oder Kohlendioxid). Auf diese Weise wird es dem Verbraucher in einer hygienischen Umverpackung zum Kauf präsentiert, wobei die Schutzgasatmosphäre die Haltbarkeit des Produkts verlängert.

Weiter umfasst die Erfindung einen Strang zur Herstellung eines grillfertigen Fleischprodukts nach Art eines Grillzopfs, einer Grillfackel, eines Grillspießes oder dergleichen. Dieser ist **dadurch gekennzeichnet, dass** er unter Verwendung von kleinteiligem Fleisch und mindestens einem Geliermittel gefertigt ist. Der Strang dient insbesondere als Vor- bzw. Zwischenprodukt für die Herstellung des erfindungsgemäßen Fleischprodukts, wie es oben beschrieben wurde.

Bezüglich der bevorzugten Ausgestaltung des erfindungsgemäßen Strangs wird ausdrücklich auf die bisherigen Ausführungsformen zum fertigen Fleischprodukt verwiesen und Bezug genommen. Die entsprechenden Merkmale werden hiermit ausdrücklich auch zum Bestandteil der Beschreibung des erfindungsgemäßen Strangs gemacht.

Schließlich umfasst die Erfindung noch ein Verfahren zur Herstellung eines grillfertigen Fleischprodukts nach Art eines Grillzopfs, einer Grillfackel, eines Grillspießes oder dergleichen. Dieses Verfahren ist dadurch gekennzeichnet, dass Stränge aus kleinteiligem Fleisch und mindestens einem Geliermittel gefertigt und mindestens zwei dieser Stränge miteinander zu dem Fleischprodukt verschlungen werden. Auch im Zusammenhang mit dem erfindungsgemäßen Verfahren wird ausdrücklich auf die bisherigen Ausführungen zum erfindungsgemäßen Grillprodukt Bezug genommen und verwiesen. Auch diesbezüglich werden die entsprechenden Merkmale ausdrücklich auch zum Inhalt der Beschreibung dieses Verfahrens gemacht.
Vorzugsweise wird das erfindungsgemäße Grillprodukt nach dem erfindungsgemäßen Verfahren so hergestellt, dass Stränge aus kleinteiligem Fleisch und mindestens einem Geliermittel mit einer Füllung hergestellt werden. Zu diesem Zweck wird zum einen eine Masse aus kleinteiligem Fleisch und Geliermittel und gegebenenfalls weiteren Zusatzstoffen, Gewürzen und dergleichen bereitgestellt. Zum anderen wird die Masse für die Füllung, in der Regel eine Gewürzmischung soßenartiger Konsistenz, vermischt mit kleinteiligem Fleisch bereitgestellt.

Aus diesen beiden Massen werden dann mit Hilfe einer geeigneten Maschine, wie sie beispielsweise aus der Herstellung von gefüllten Back- und Konditoreiwaren bekannt ist, gefüllte Fleischstränge hergestellt. Dann wird aus beispielsweise zwei Fleischsträngen ein erfindungsgemäßes grillfertiges Fleischprodukt hergestellt, indem die beiden Stränge mit Hilfe der gleichen Maschine miteinander verschlungen werden. Auf das fertig verschlungene Produkt wird dann eine wässrige Lösung aus einem Festigungsmittel aufgebracht, beispielsweise aufgesprüht. So entsteht das endgültige erfindungsgemäße Fleischprodukt, das dann in Längsrichtung in Abschnitte geschnitten und verpackt wird.

Wie die bisherigen Ausführungen zeigen, ist die beschriebene Erfindung mit einer ganzen Reihe von Vorteilen verbunden. So können grillfertige Fleischprodukte nach Art von Grillzöpfen, Grillfackeln, Grillspießen oder dergleichen maschinell hergestellt werden, in denen die jeweiligen Bestandteile gewichtsgenau, d. h. mit exakt einstellbaren Gewichtsanteilen, enthalten sind. Durch die maschinelle Fertigung bzw. zumindest die maschinelle Vorfertigung der das Produkt bildenden Stränge kann exakt immer die gleiche geometrische Form des Produkts gewährleistet werden. Darüber hinaus ist die maschinelle Fertigung natürlich viel effektiver und kostengünstiger als eine manuelle Fertigung.
Des weiteren lässt sich mit der Erfindung ein Produkt bereitstellen, das aufgrund seiner Konsistenz und Optik den Eindruck erweckt, dass es sich um massives Fleisch handelt. Das kleinteilige Fleisch wird durch das erfindungsgemäß eingesetzte Geliermittel nämlich in einer Weise verfestigt, dass der entsprechende Eindruck für den Verbraucher entsteht. Dem Verbraucher wird somit ein neues Produkt zur Verfügung gestellt.

Die beschriebenen Merkmale und weitere Merkmale der Erfindung ergeben sich aus der nachfolgenden Beschreibung einer bevorzugten Ausführungsform in Verbindung mit den Unteransprüchen und den Zeichnungen. Hierbei können die einzelnen Merkmale jeweils für sich oder zu mehreren in Kombination miteinander verwirklicht sein.

In den Zeichnungen zeigen
- Fig. 1: ein erfindungsgemäßes grillfertiges Fleischprodukt nach Art eines Grillzopfs in langgestreckter, nicht geschnittener Form, wie es direkt von der Herstellungsmaschine bereitgestellt wird.
- Fig. 2: ein abgelängtes Stück des Grillzopfs gemäß Fig. 1, wie es zur Verpackung vorgesehen ist.
- Fig. 3: das abgelängte Stück gemäß Fig. 2 in Schnittansicht.

### Beispiel

Zur Herstellung eines erfindungsgemäßen Fleischprodukts wird zunächst ungewürztes Putenfleisch in einem Fleischwolf fein zerkleinert. Der Teilchendurchmesser des zerkleinerten Fleisches betrug ca. 4 mm, so dass die eigentliche Fleischstruktur nicht mehr erkennbar ist.
Die so erhaltene Fleischmasse wird mit Natriumalginat als Geliermittel versetzt. Dieses Geliermittel wurde dadurch erhalten, dass Natriumalginat mit Wasser im Gewichtsverhältnis 1:10 versetzt wurde. Die Menge an Natriumalginat wurde dabei so gewählt, dass sie einem Gewichtsanteil von 1 Gew.-% in der Fleischmasse entspricht. Dann wurden noch Lactose und Gewürze als weitere Bestandteile der Fleischmasse zugegeben.

In einem weiteren Ansatz wurde die Füllung für das Fleischprodukt in der Weise bereitgestellt, dass eine Soßenzusammensetzung und kleinteiliges Fleisch (siehe oben) im Verhältnis 1:1 vermischt wurden.

Dann wurden die beiden erhaltenen Massen (Fleischmasse und Füllung) auf einer Maschine der Firma Rheon, die zur Herstellung von gefüllten Backwaren und gefüllten Konditoreiwaren bekannt ist, verarbeitet. Dabei wurden die Maschinenparameter so gewählt, dass 50 Gew.-% der Fleischmasse und 50 Gew.-% der Füllmasse zu einem befüllten Strang (100 Gew.-%) verarbeitet werden. Die Füllmasse bildet dabei das Innere des Strangs, während die Fleischmasse das Äußere, d. h. die Hülle des Strangs, bildet. Aufgrund der Tatsache, dass das Geliermittel nur in der Fleischmasse, die die Hülle bildet, enthalten ist, beträgt der Gewichtsanteil des Geliermittels im gesamten Strang 0,5 Gew.-%.

Im vorliegenden Fall werden in der Maschine gleichzeitig zwei gefüllte Stränge hergestellt, die dann gleich in der selben Maschine fortlaufend miteinander zu einem fertigen erfindungsgemäßen Grillprodukt verschlungen werden. Die beiden gefüllten Stränge und das fertige Produkt werden also auf der Maschine kontinuierlich solange produziert, bis die jeweiligen Vorräte an Fleischmasse und Füllung aufgebraucht sind.

Nach dem Verschlingen der beiden Stränge zum Endprodukt wird dieses mit einer wässrigen Calciumsulfat-Lösung von außen in Form eines Nebels besprüht. Das Calciumsulfat dient dabei in der bereits beschriebenen Weise als Festigungsmittel, das mit dem Geliermittel Alginat zusammenwirkt und dieses dreidimensional vernetzt. Auf diese Weise wird die Festigkeit des fertigen Produkts für die Weiterverarbeitung, d. h. Verpackung und Lagerung weiter verbessert.

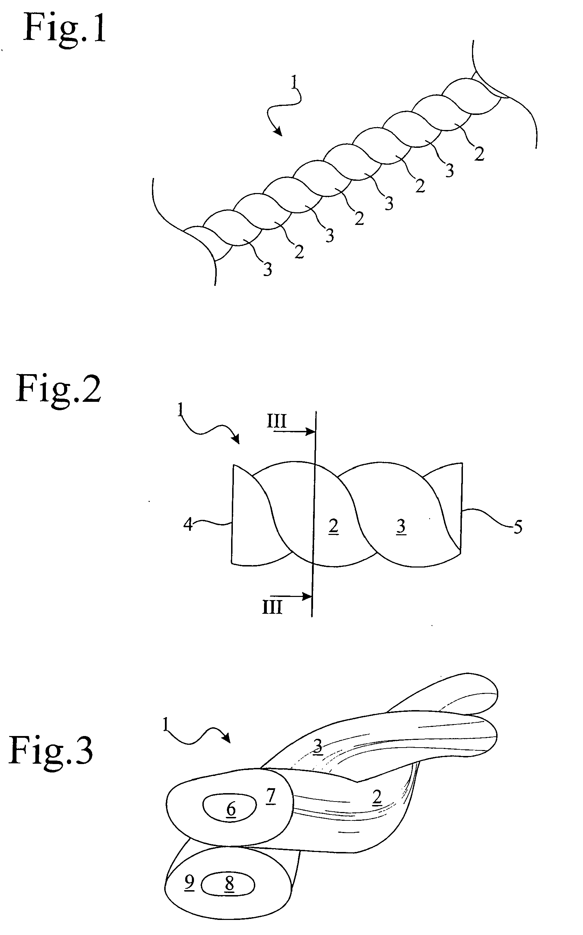

Unter Bezugnahme auf das beschriebene Beispiel zeigt Fig. 1 das erfindungsgemäße Fleischprodukt 1 aus zwei erfindungsgemäßen Strängen 2 und 3. Wie Fig. 1 zeigt, sind diese beiden Stränge 2 und 3 miteinander verschlungen und somit gegeneinander festgelegt.
Fig. 1 zeigt die Situation, wie das Fleischprodukt 1 aus der Herstellungsmaschine als "Endlosprodukt" herauskommt.

In Fig. 2 ist das erfindungsgemäße Produkt 1 nochmals dargestellt, wobei bereits ein entsprechendes Stück zur Verpackung von der Endlosform gemäß Fig. 1 abgelängt, d. h. abgeschnitten ist. Auch in Fig. 2 sind die miteinander verschlungenen Stränge 2 und 3 deutlich zu erkennen.
Die Schnittkanten sind in Fig. 2 mit den Bezugszeichen 4 und 5 bezeichnet.
Das abgeschnittene Stück des Fleischprodukts 1 gemäß Fig. 2 kann jetzt beispielsweise in einer geeigneten Verpackung, vorzugsweise unter Schutzgasatmosphäre, verpackt werden.

Fig. 3 zeigt das in Fig. 2 dargestellte Fleischprodukt 1 in Blickrichtung aus einer Schnittkante, d. h. in Schnittansicht. Auch hier sind die miteinander verschlungenen Stränge 2 und 3 deutlich zu erkennen. Weiter zeigt Fig. 3, dass beide Stränge 2 und 3 jeweils aus einer Füllung 6 bzw. 8 und einer äußeren Hülle oder Ummantelung 7 bzw. 9 bestehen. Die aus der Fleischmasse gemäß Beispiel gebildeten äußeren Schichten 7 und 9 umhüllen die aus der Füllmasse gebildeten Füllungen (Kerne) 6 und 8 vollständig, so dass von den Füllungen 6 und 8 nichts nach außen treten kann.

## Patentansprüche

1. Grillfertiges Fleischprodukt (1) nach Art eines Grillzopfs, einer Grillfackel, eines Grillspießes oder dergleichen, aus mindestens zwei mindestens teilweise miteinander verschlungenen, fleischhaltigen Strängen, **dadurch gekennzeichnet, dass** die Stränge (2, 3) unter Verwendung von kleinteiligem Fleisch und mindestens einem Geliermittel gefertigt sind.

2. Fleischprodukt nach Anspruch 1, **dadurch gekennzeichnet, dass** es aus zwei miteinander verschlungenen Strängen (2, 3) besteht.

3. Fleischprodukt nach Anspruch 1 oder Anspruch 2, **dadurch gekennzeichnet, dass** der Teilchendurchmesser des Fleisches weniger als 10 mm, vorzugsweise zwischen 3 bis 5 mm, insbesondere ca. 4 mm, beträgt.

4. Fleischprodukt nach einem der vorherigen Ansprüche, **dadurch gekennzeichnet, dass** es sich bei dem Geliermittel um mindestens eines der Salze der Alginsäure handelt, wobei vorzugsweise es sich bei dem Salz der Alginsäure um Natriumalginat, Kaliumalginat und/oder Ammoniumalginat handelt.

5. Fleischprodukt nach einem der vorherigen Ansprüche, **dadurch gekennzeichnet, dass** das Geliermittel im Strang in einer Menge von mindestens 0,2 Gew.-%, vorzugsweise in einer Menge zwischen 0,2 Gew.-% und 5 Gew.-%, insbesondere in einer Menge von ca. 0,5 Gew.-%, bezogen auf das Gewicht des Strangs, enthalten ist.

6. Fleischprodukt nach einem der vorherigen Ansprüche, **dadurch gekennzeichnet, dass** es zusätzlich mindestens ein Festigungsmittel aufweist, wobei vorzugsweise es sich bei dem Festigungsmittel um ein Calciumsalz, insbesondere um Calciumsulfat, handelt.

7. Fleischprodukt nach Anspruch 6, **dadurch gekennzeichnet, dass** das Festigungsmittel in einer Menge von mindestens 0,2 Gew.-%, vorzugsweise in einer Menge zwischen 0,2 Gew.-% und 5 Gew.-%, insbesondere in einer Menge von ca. 0,5 Gew.-%, bezogen auf das Gewicht des Strangs, vorgesehen ist.

8. Fleischprodukt nach einem der vorherigen Ansprüche, **dadurch gekennzeichnet, dass** mindestens ein Teil der Stränge mindestens teilweise gefüllt ist, wobei vorzugsweise die Stränge mit einer Gewürzsoße gefüllt sind.

9. Fleischprodukt nach Anspruch 8, **dadurch gekennzeichnet, dass** die Füllung fleischhaltig ist, wobei vorzugsweise der Fleischanteil in der Füllung mindestens 30 Gew.-%, insbesondere ca. 50 Gew.-%, bezogen auf das Gesamtgewicht der Füllung, beträgt.

10. Fleischprodukt nach Anspruch 8 oder Anspruch 9, **dadurch gekennzeichnet, dass** der Gewichtsanteil der Füllung am Gewicht des Strangs mindestens 20 Gew.-%, vorzugsweise mindestens 40 Gew.-%, insbesondere ca. 50 Gew.-%, beträgt.

11. Fleischprodukt nach einem der vorherigen Ansprüche, **dadurch gekennzeichnet, dass** es zu mindestens 80 Gew.-% aus Fleisch besteht.

12. Fleischprodukt nach einem der vorherigen Ansprüche, **dadurch gekennzeichnet, dass** es sich bei dem Fleisch um Geflügelfleisch, vorzugsweise um Putenfleisch handelt.

13. Fleischprodukt nach einem der vorherigen Ansprüche, **dadurch gekennzeichnet, dass** das Produkt oder insbesondere zumindest die das Produkt bildenden Stränge maschinell hergestellt sind.

14. Fleischprodukt nach einem der vorherigen Ansprüche, **dadurch gekennzeichnet, dass** es sich in einer luftdichten Verpackung, insbesondere unter einer Schutzgasatmosphäre, befindet.

15. Strang zur Herstellung eines grillfertigen Fleischprodukts nach Art eines Grillzopfs, einer Grillfackel, eines Grillspießes oder dergleichen, **dadurch gekennzeichnet, dass** er unter Verwendung von kleinteiligem Fleisch und mindestens einem Geliermittel gefertigt ist.

16. Verfahren zur Herstellung eines grillfertigen Fleischprodukts nach Art eines Grillzopfs, einer Grillfackel, eines Grillspießes oder dergleichen, **dadurch gekennzeichnet, dass** Stränge aus kleinteiligem Fleisch und mindestens einem Geliermittel gefertigt und mindestens zwei dieser Stränge miteinander zu dem Fleischprodukt verschlungen werden.
